# EUROPÄISCHE PATENTSCHRIFT

(11) **EP 0 756 341 B1**
(45) Veröffentlichungstag und Bekanntmachung des Hinweises auf die Patenterteilung: **21.04.1999**
(21) Anmeldenummer: 96109776.3
(22) Anmeldetag: 18.06.1996
(51) Int. Cl.: H01M 2/36, F16K 31/24, F16K 31/22

(54) **Wassernachfüllstopfen für einen flüssigen Elektrolyten enthaltende Batterien**
Automatic watering plug for batteries containing liquid electrolyte
Bouchon de remplissage automatique pour batterie d'accumulateurs contenant de l'électrolyte liquide

(30) Priorität: 25.07.1995 DE 29511994 U
(43) Veröffentlichungstag der Anmeldung: 29.01.1997
(73) Patentinhaber: Landau Systemtechnik GmbH, 41749 Viersen (DE)
(72) Erfinder: Landau, Reinhard, 41749 Viersen (DE)
(74) Vertreter: Manitz, Gerhart, Dr.

(56) Entgegenhaltungen:
- WO-A-91/17577
- FR-A- 2 311 412
- US-A- 4 386 141
- US-A- 4 512 378
- US-A- 4 696 874
- US-A- 4 751 156

## Beschreibung

Die Erfindung betrifft einen Wassernachfüllstopfen für einen flüssigen Elektrolyten enthaltende Batterien nach dem Oberbegriff des Anspruchs 1.

Ein derartiger Wassernachfüllstopfen ist bereits aus der WO 91/17577 bekannt. Er dient dazu, die Wassernachfüllung von Batterien zu automatisieren und sicherer zu machen, indem bei Erreichen eines vorgegebenen Elektrolytflüssigkeitsstandes ein Ventil automatisch geschlossen und so der weitere Zulauf von Wasser in das Innere der Batterie verhindert wird.

Der bekannte Wassernachfüllstopfen hat den Nachteil, daß der Ventilstößel über einen gewissen Bereich relativ zum Querstück der Schwimmerstange beweglich angeordnet ist, was bei der bekannten Anordnung zwecks sicheren Schließens des Ventils für erforderlich gehalten wird. Die bewegliche Anordnung des Ventilstößels am Querstück erfordert jedoch einen erhöhten Herstellungsaufwand, führt zu einer unsichereren mechanischen Verbindung von Schwimmer und Ventilkörper und beinhaltet außerdem die Gefahr, daß beispielsweise durch Verschmutzung die Beweglichkeit mit der Zeit nachläßt, wodurch die Schwimmerstange und der Ventilstößel schließlich weniger günstige Positionen relativ zueinander einnehmen können.

Das Ziel der vorliegenden Erfindung besteht darin, die Montage des Wassernachfüllstopfens wesentlich zu vereinfachen und gleichwohl dafür zu sorgen, daß zwischen dem Schwimmer und dem Ventilkörper eine exakte räumliche Position festgelegt wird.

Zur Lösung dieser Aufgabe sind die Merkmale des kennzeichnenden Teils des Patentanspruchs 1 vorgesehen. Vorteilhafte Weiterbildungen entnimmt man den Ansprüchen 2 bis 5. Auf diese Weise bilden der Schwimmer, die Schwimmerstange, das Querstück, der Ventilstößel und der Ventilkörper praktisch eine starre Baueinheit, die nicht nur für den rauhen Betrieb die erforderliche Festigkeit aufweist, sondern auch gewährleistet, daß während der gesamten Lebensdauer eine eindeutige vertikale Relativpositionierung von Ventilkörper und Schwimmer gewährleistet ist. Die gewünschte exakte strukturelle Beziehung zwischen dem Ventilkörper mit dem Ventilstößel einerseits und dem Schwimmer mit der Schwimmerstange und dem Querstück andererseits ist also trotz der leichten Montage gesichert.

Die universelle Verwendbarkeit des erfindungsgemäßen Wassernachfüllstopfens wird weiter durch die Ausbildungen nach den Ansprüchen 6 und 7 verbessert. Der Wassernachfüllstopfen gemäß Anspruch 6 wird in erster Linie für Traktionsbatterien verwendet. Der Wassernachfüllstopfen nach Anspruch 7 kann durch Bereitstellung unterschiedlichster Adapter praktisch bei jedem denkbaren Batterietyp verwendet werden.

Die Erfindung wird im folgenden beispielsweise anhand der Zeichnung beschrieben; in dieser zeigt:
- Fig. 1: eine schematische Schnittansicht einer ersten Ausführungsform eines erfindungsgemäßen Wassernachfüllstopfens für einen flüssigen Elektrolyten enthaltende Batterien,
- Fig. 2: eine Rückansicht des Gegenstandes der Fig. 1 bei abgenommenem Schwimmer,
- Fig. 3: eine Draufsicht des Gegenstandes der Fig. 2, die
- Fig. 4a bis 4e: Ansichten analog Fig. 1, wobei Schwimmer unterschiedlicher Tiefenerstreckung vorgesehen sind,
- Fig. 5: eine Seitenansicht der erfindungsgemäßen Schwimmerstange mit Querstück in gegenüber Fig. 1 vergrößertem Maßstab,
- Fig. 6: eine teilweise geschnittene Ansicht nach Linie VI-VI in Fig. 5,
- Fig. 7: einen Schnitt nach Linie VII-VII in Fig. 5,
- Fig. 8: eine Seitenansicht des erfindungsgemäßen Ventilkörpers mit dem oben daran angeordneten Ventilstößel, wobei links und rechts der Mittelachse 39 des Ventilstößels zwei unterschiedliche Ausführungsformen angedeutet sind,
- Fig. 9: eine Schnittansicht analog Fig. 1 einer weiteren Ausführungsform,
- Fig. 10: eine Rückansicht des Gegenstandes der Fig. 9 bei abgenommenen Schwimmer,
- Fig. 11: eine Draufsicht des Gegenstandes der Fig. 10 und die
- Fig. 12a bis 12e: Ansichten analog Fig. 10, wobei an der Schwimmerstange Schwimmer unterschiedlicher Tiefenerstreckung angeordnet sind.

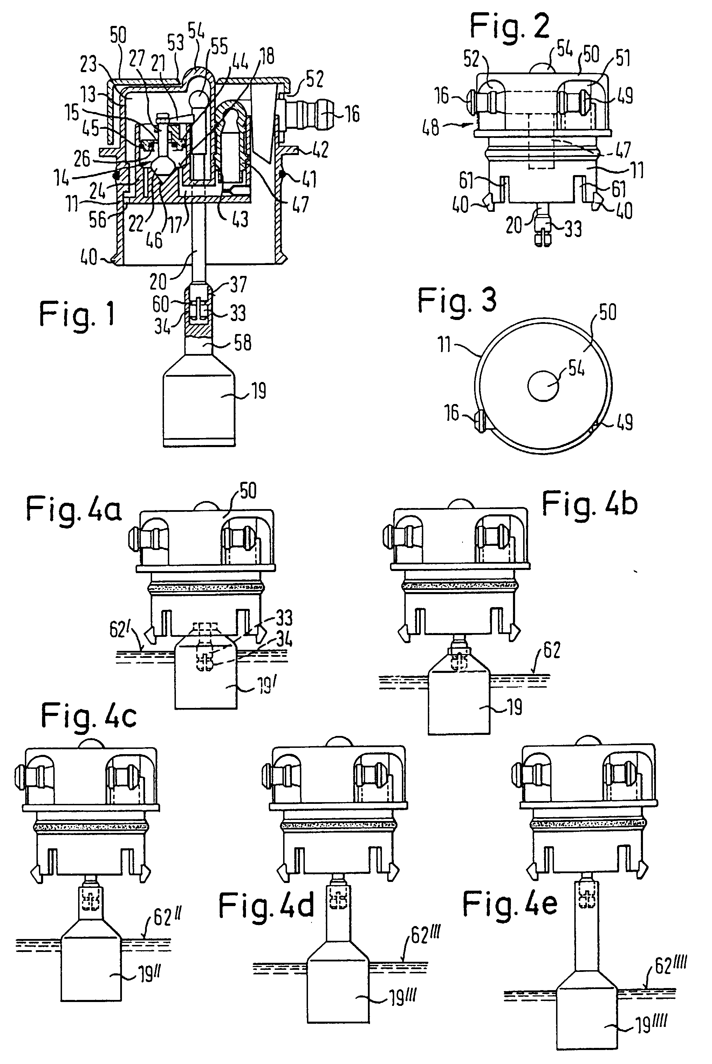

Nach Fig. 1 weist ein unten offenes und oben im wesentlichen geschlossenes Steckstopfengehäuse 11 unten eine Haltelippe 40 und darüber einen Dichtring 41 auf, mittels denen das in eine nicht dargestellte Batteriegehäuseöffnung eingesteckte Steckstopfengehäuse 11 dicht und vertikal fest in dieser Öffnung angeordnet werden kann. Ein Ringflansch 42 gewährleistet, daß das Steckstopfengehäuse 11 nur bis zum Anschlagen des Ringflansches 42 an einer Gegenfläche des Batteriegehäuses eingesteckt werden kann. Aufgrund von nach unten offenen Axialschlitzen 61 kann der untere Randbereich des Steckstopfengehäuses 11 beim Einsetzen in eine Batterieöffnung radial nach innen federn, wodurch die Haltelippe 40 in eine am Batteriegehäuse vorgesehene komplementäre Umfangsnut einschnappen können und den Wassernachfüllstopfen dadurch sicher am Batteriegehäuse hält.

Am oben weitgehend geschlossenen Steckstopfengehäuse 11 befindet sich in einem deutlichen vertikalen Abstand von der unteren Dichtlippe 40 ein Ventilgehäuse 24, welches einen Ventilkörper 22 mit einem oben daran angeordneten Ventilstößel 27 enthält, der sich durch eine obere Wasserzulauföffnung 15 mit Spiel in den Innenraum 23 einer darüber befindlichen Wasserkammer 13 erstreckt, die exzentrisch in eine mit dem Ringflansch 42 bündige Deckplatte des Gehäuses 11 eingesetzt ist und im wesentlichen kreiszylindrisch mit deutlich geringerem Durchmesser als das Gehäuse ausgebildet ist. Das obere Ende des Ventilstößels 27 ist erfindungsgemäß zumindest in vertikaler Richtung formschlüssig und spielfrei an einem Querstück 21 befestigt, deren anderes Ende mit einer sich vertikal erstreckenden Schwimmerstange 20 fest verbunden ist, die sich von oben in ein seitlich an die Wasserkammer 13 angeformtes, vertikales, oben offenes Rohr 43 erstreckt, welches unten offen ist und bis auf die Höhe des Bodens der Kammer 13 reicht, so daß die Schwimmerstange 20 durch dieses Rohr 43 mit Spiel hindurchtritt, um in einem geringen Abstand unterhalb der Dichtlippe 40 in einem Kupplungsstück 33 zu enden.

Rund um die Wasserzulauföffnung 15 ist an der Unterseite des Deckels des Ventilgehäuses 24 ein kreisringförmiger Ventilsitz 26 vorgesehen, der mit der oberen teilkugelartigen Oberfläche des Ventilkörpers 22 derart zusammenarbeitet, daß beim Anliegen des Ventilkörpers 22 am Ventilsitz 26 die Wasserdurchlauföffnung 15 geschlossen ist.

Der Deckel 44 des Ventilgehäuses 24 ist mit einer Ringdichtung 45 gegenüber dem Umfang des Ventilgehäuses 24 abgedichtet und vorzugsweise auch vertikal gehalten.

Auf diese Weise wird ein Ventil 14 gebildet, welches in Fig.1 in der Offenstellung dargestellt ist, in welcher der Ventilkörper 22 in einer trichterartigen Öffnung 46 am Boden des Ventilgehäuses 24 ruht und ein unten an der Schwimmerstange 20 mittels eines Kupplungsgegenstückes 34 am Kupplungsstück 33 befestigter Schwimmer 19 sich in seiner tiefsten Position befindet.

Während die Wasserzulauföffnung 15 den Auslaß des Ventils 14 bildet, ist unmittelbar neben der sich konusförmig nach unten verjüngenden Öffnung 46 ein Ventileinlaß 18 vorgesehen, der über eine zunächst senkrecht nach unten und dann horizontal verlaufende Strömungsverbindung 17 mit dem Inneren eines Stegrohres 47 eines T-förmigen Verteilers 48 verbunden ist, der zwei sich senkrecht zum Stegrohr 47 erstreckende Rohrstutzen 16, 49 aufweist, die sich auf der Oberseite des Steckstopfengehäuses 11 befinden und an welche Wasserzulauf- bzw. -ablauf schläuche angeschlossen werden können. Auf die gesamte Anordnung ist ein Deckel 50 aufgeklipst, welcher seitlich Durchlaßöffnungen 51 bzw. 52 aufweist, durch die hindurch die Rohrstutzen 16, 49 zugänglich sind.

Die Oberseite der Wasserkammer 13 ist als Deckel 53 mit einem Anzeigedom 54 ausgebildet, welcher sich oberhalb des oberen kugelförmigen Endes 55 der Schwimmerstange 20 befindet, wodurch die Vertilkalposition der Schwimmerstange 20 und damit des Schwimmers 19 in Augenschein genommen werden kann.

Der weitere Aufbau des erfindungsgemäßen Wassernachfüllstopfens nach den Fig. 1 bis 3 ergibt sich aus der folgenden Funktionsbeschreibung:

Es sei zunächst angenommen, daß das Steckstopfengehäuse 11 nach den Fig. 1 bis 3 in eine obere Öffnung eines nicht dargestellten Batteriegehäuses bis zum Ringflansch 42 eingesteckt ist und daß der Flüssigkeitsstand im Innern der Batterie so niedrig sei, daß der Schwimmer 19 sich entweder oberhalb des Flüssigkeitsspiegels befindet oder nur so wenig in den Elektrolyten eingetaucht ist, daß er noch keinen Schwimmzustand einnimmt. In diesem Fall liegt der Ventilkörper 22 in der Konusöffnung 46, und zwar aufgrund des Gewichtes des Schwimmers 19, der Schwimmerstange 20, des Querstückes 21, des Ventilstößels 27 und des Ventilkörpers 22.

Wird nunmehr durch den Rohrstutzen 16 bei abgeschlossenem Rohrstutzen 49 Wasser in das Stegrohr 47 gedrückt, so fließt dieses durch die Strömungsverbindung 17 und den Ventileinlaß 18 in das Innere des Ventils 14 und von dort durch die Wasserzulauföffnung 15 in die Wasserkammer 23. Von dort kann das Wasser teilweise durch das Rohr 43 an der Schwimmerstange 20 vorbei oder durch sonst noch im roten Bereich der Wasserkammer 23 vorgesehene Öffnungen, z.B. eine Auslauföffnung 56 in das Innere des Batteriegehäuses fließen, wodurch dort der Elektrolytflüssigkeitsstand ansteigt. Dadurch taucht der Schwimmer 19 immer tiefer in die Elektrolytflüssigkeit ein, bis er schließlich schwimmt und zusammen mit dem Flüssigkeitsspiegel nach oben angehoben wird. Über die Schwimmerstange 20, das Querstück 21 und den Ventilstößel 27 wird dabei der Ventilkörper 22 nach oben mitgenommen, bis er sich schließlich von unten auf den Ventilsitz 26 aufsetzt und dadurch das Ventil 14 schließt. Nunmehr ist der Flüssigkeitsstrom vom Rohrstutzen 16 in den Innenraum 23 der Wasserkammer 13 unterbrochen, und der Elektrolytspiegel im Batteriegehäuse kann nicht weiter ansteigen.

Der zweite Rohrstutzen 49 an dem T-förmigen Verteiler dient zum Anbringen eines weiteren Schlauches, der dann zu einem weiteren erfindungsgemäßen Wassernachfüllstopfen führt. Auf diese Weise können zahlreiche Wassernachfüllstopfen hintereinandergeschaltet und von der gleichen Quelle aus mit destilliertem Wasser beschickt werden. Beim letzten Wassernachfüllstopfen in dieser Reihe ist der Rohrstutzen 49 zu verschließen, um dort das Auslaufen von Wasser zu vermeiden.

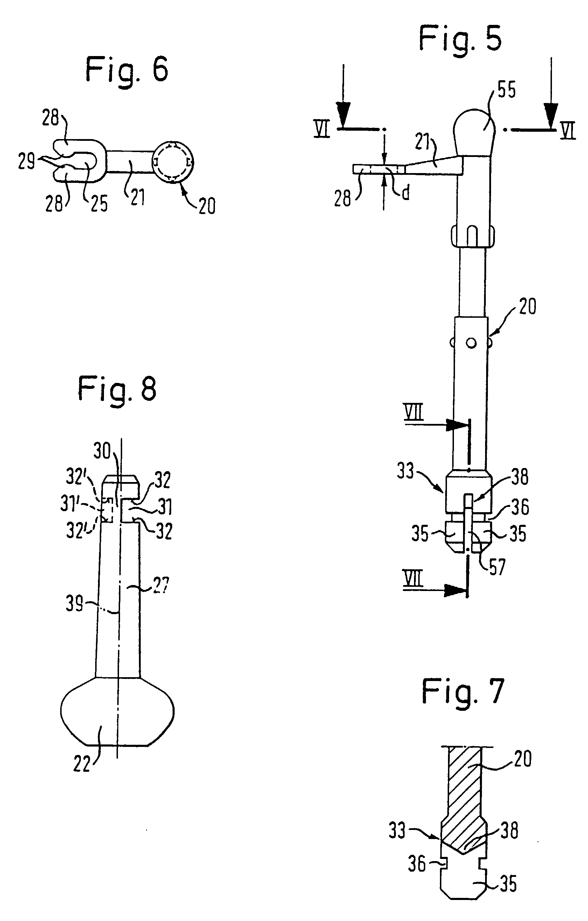

Erfindungsgemäß erstreckt sich die Schwimmerstange 20 nur ein kurzes Stück unterhalb des Steckstopfengehäuses 11 und weist dort das Kupplungsstück 33 auf, welches gemäß den Fig. 5 und 7 als Gabel 38 mit zwei durch einen Längsschlitz 57 voneinander getrennten, federnden Gabelzinken 35 und einer Umfangsnut 36 ausgebildet ist.

Nach Fig. 1 ist das obere Ende eines stangenförmigen Teils 58 des Schwimmers 19 sacklochartig ausgebildet. Das Sackloch 37 weist eine zum Kupplungsstück 33 komplementäre Form auf und insbesondere radial einwärts vorstehende Vorsprünge 60, die auch als Ringwulst ausgebildet sein können. Auf diese Weise kann das Kupplungsgegenstück 34 passend auf das Kupplungsstück 33 aufgeschoben werden. Durch federndes Zusammendrücken der Gabelzinken 35 (Fig. 5, 7) können die Vorsprünge 60 an der Innenwand des Sackloches 59 in die Ringnut 36 einschnappen, wodurch der Schwimmer 19 eine feste Baueinheit mit der Schwimmerstange 20 bildet.

Fig. 4b zeigt einen Schwimmer 19, der gemäß Fig. 1 ausgebildet ist und beispielsweise für einen Akkumulator bzw. eine Batterie bestimmt ist, in der nach dem Aufsetzen des Wassernachfüllstopfens ein Flüssigkeitsspiegel 62 vorhanden sein soll. In der in Fig. 4b dargestellten Position befindet sich der Schwimmer 19 in der angehobenen Position, und das Ventil 14 (Fig. 1) ist geschlossen.

An ein und demselben Kupplungsstück 33 kann nach Fig. 4a auch ein Schwimmer 19' angeordnet werden, der eine nach oben offene Zentralbohrung aufweist, durch die das Kupplungsstück 33 an der Schwimmerstange 20 wesentlich tiefer in den Schwimmer 19' eindringen kann, bis zu dem dort befindlichen Kupplungsgegenstück 34, wo wieder die oben beschriebene Verbindung zwischen dem Schwimmer 19' und der zwischen dem Schwimmer 19' und der Schwimmerstange 20 durch Aufklipsen hergestellt wird. Der nicht so tief in das Batteriegehäuse eintauchende Schwimmer 19' ist beispielsweise dann zu verwenden, wenn der Elektrolytspiegel 62' in der mit dem Stopfen verschlossenen Batterie beispielsweise die Sollhöhe 62' aufweisen soll.

Die Fig. 4c, 4d und 4e zeigen Schwimmer 19", 19"' bzw. 19"", die für jeweils tiefere Sollflüssigkeitsspiegel 62", 62"' bzw. 62"" geeignet sind.

Eine besonders vorteilhafte Ausbildung des Querstückes 21 am oberen Ende der Schwimmerstange 20 entnimmt man den Fig. 5 und 6. Danach ist das eine Ende des Querstückes 21 fest und unlösbar z.B. durch Kleben, Schweißen oder gemeinsames Herausformen an der Schwimmerstange 20 befestigt.

Das gegenüberliegende freie Ende ist gabelförmig ausgebildet, wodurch zwei federnd auseinanderdrückbare Gabelzinken 28 ausgebildet werden, die zwischen sich einen Gabelschlitz 25 einschließen. Am von der Schwimmerstange 20 abgewandten Ende der Gabelöffnung 25 weisen die Gabelzinken 28 nach innen vorstehende Rastvorsprünge 29 auf.

Nach Fig. 8 ist das obere Ende des Ventilstößels 27 entweder mit einer bis zur Mittelachse 39 reichenden Nut 31 versehen, deren Grund parallel zur Mittelachse 39 verläuft und deren Seitenflanken 32 einen ebenen und horizontalen Verlauf haben.

Alternativ könnten auf diametral gegenüberliegenden Seiten des Ventilstößels 27 zwei entsprechende, jedoch nicht so tiefe Nuten 31' mit horizontalen Seitenflanken 32' vorgesehen sein, wie das in Fig. 8 auf der linken Seite der Mittelachse 39 gestrichelt angedeutet ist.

Die Höhe der Nuten 31 bzw. 31' ist entsprechend der Dicke d des Querstückes 21 im Bereich der Gabelzinken 28 zu wählen (Fig. 5).

Weiter ist es wesentlich, daß an den Rastvorsprüngen 29, und zwar an der offenen Seite des Gabelschlitzes 25 Einlaufschrägen vorgesehen sind.

Auf diese Weise kann der Ventilstößel 27 in rechtwinkliger Ausrichtung zum Querstück 21 mit seiner Nut 31 bzw. seinen Nuten 31' von der Seite her auf die Gabelzinken 28 unter Auseinanderdrückung derselben aufgeschoben werden. Sobald sich der Steg am Ende des Grundes der Nut 31 bzw. den Nuten 31' in dem erweiterten Teil des Gabelschlitzes 25 befindet, schnappen die Gabelzinken 28 wieder zusammen, wobei sich die Rastvorsprünge 29 an den Umfang 30 (Fig. 8) des Ventilstößels 27 derart anlegen, daß der Ventilstößel 27 gegen Abziehen vom Querstück 21 gesichert ist.

Derjenige Umfangsteil des Ventilstößels 27, der dem mit den Rastvorsprüngen 29 in Eingriff stehenden Umfangsteil diametral gegenüberliegt, liegt an dem Ende des Gabelschlitzes 25 an, der der Schwimmerstange 20 zugewandt ist.

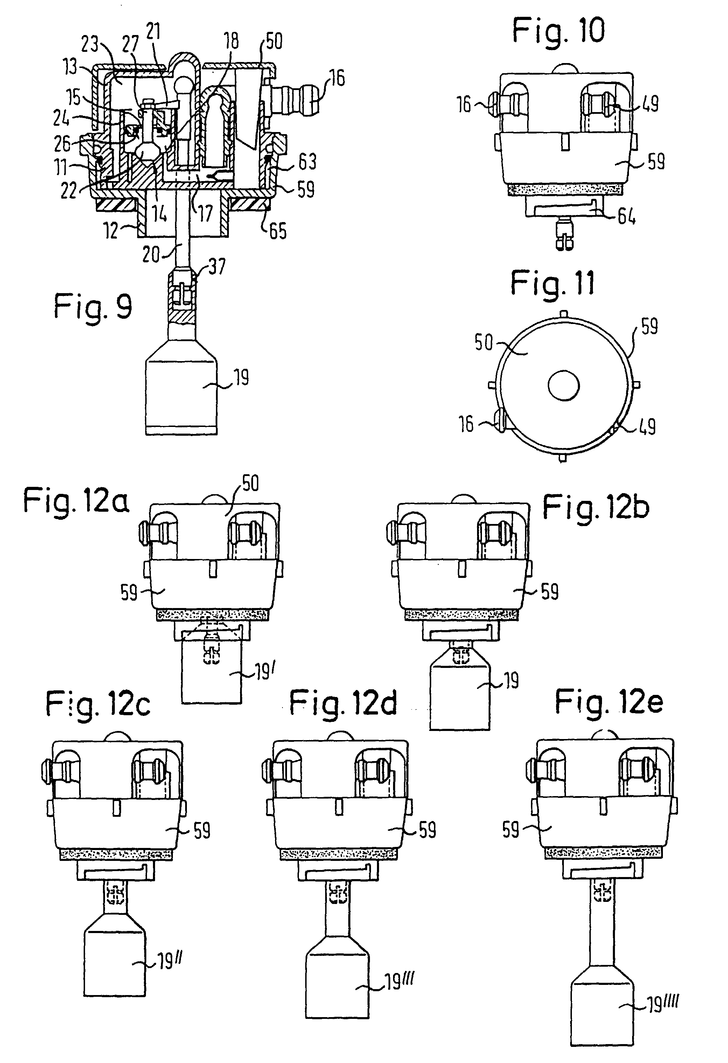

In den Fig. 9 bis 12 bezeichnen gleiche Bezugszahlen entsprechende Bauelemente wie in der vorangehenden Beschreibung.

Im Unterschied zu Fig. 1 weist das Ausführungsbeispiel nach den Fig. 9 bis 11 ein unten verkürztes Steckstopfengehäuse 11 auf. Auf dieses ist von unten ein Ringadapter 59 aufgesetzt, der eine zum Außenumfang des Steckstopfengehäuses 11 komplementäre Aufnahmeöffnung 63 aufweist und dicht mit dem Steckstopfengehäuse 11 verbunden ist.

An seiner Unterseite weist der Adapter 59 einen kreiszylindrischen Verschlußvorsprung auf, der an seinem Außenumfang eine Bajonettverschlußvorrichtung 64 (Fig. 10) aufweist, die mit einem komplementären Gegenstück in einem Batteriegehäuse zusammenarbeitet. Außerdem ist um den Verschlußvorsprung 12 herum noch eine Scheibendichtung 65 vorgesehen.

Statt des in den Fig. 9, 10 dargestellten Adapters 59 mit einem Bajonett-Verschlußvorsprung 12 können auch Adapter vorgesehen sein, deren Aufnahmeöffnung 63 identisch wie nach den Fig. 9, 10 ausgebildet ist, welche jedoch einen Verschlußvorsprung 12 aufweisen, der außen mit einem Gewinde, beispielsweise einem Gewinde M27 und einem Gewinde M30 ausgestattet ist.

Auf diese Weise kann der erfindungsgemäße Wassernachfüllstopfen auch bei Batteriegehäusen angewendet werden, die in ihrer Wassernachfüllöffnung eine Bajonettverschlußvorrichtung oder ein metrisches Gewinde M27 bzw. M30 aufweisen.

Die Fig. 12a bis 12e entsprechen den Fig. 4a bis 4e und machen deutlich, daß der sich aus den Fig. 9 und 10 ergebende Grundkörper des erfindungsgemäßen Wassernachfüllstopfens sowohl mit unterschiedlichen Adaptern 59 als auch mit unterschiedlichen Schwimmern, 19, 19', 19", 19"', 19"" ausgestattet werden kann, so daß mit einem einzigen Typ eines derartigen Grundkörpers eine universale Anpassung an unterschiedliche Typen von Batteriegehäuseöffnungen und an unterschiedliche Soll-Elektrolytstände in den Batterien erfolgen kann.

### Bezugszeichenliste

- 11: Steckstopfengehäuse
- 12: Verschlußvorsprung
- 13: Wasserkammer
- 14: Ventil
- 15: Wasserzulauföffnung
- 16: Rohrstutzen
- 17: Strömungsverbindung
- 18: Ventileinlaß
- 19, 19', 19" bis 19"": Schwimmer
- 20: Schwimmerstange
- 21: Querstück
- 22: Ventilkörper
- 23: Innenraum der Wasserkammer 13
- 24: Ventilgehäuse
- 25: Gabelschlitz
- 26: Ventilsitz
- 27: Ventilstößel
- 28: Gabelzinken
- 29: Rastvorsprünge
- 30: Umfangsfläche
- 31,31': Nut
- 32,32': Seitenflanken
- 33: Kupplungsstück
- 34: Kupplungsgegenstück
- 35: Gabelzinken
- 36: Umfangsnut
- 37: Ausnehmung
- 38: Gabel
- 39: Mittelachse
- 40: Haltelippe
- 41: Dichtring
- 42: Ringflansch
- 43: Rohr
- 44: Deckel
- 45: Ringdichtung
- 46: Öffnung
- 47: Stegrohr
- 48: Verteiler
- 49: Rohrstutzen
- 50: Deckel
- 51: Durchlaßöffnung
- 52: Durchlaßöffnung
- 53: Deckel
- 54: Anzeigedom
- 55: kugelförmiges Ende
- 56: Auslaßöffnung
- 57: Längsschlitz
- 58: stangenförmiges Teil
- 59: Adapter
- 60: Vorsprung
- 61: Axialschlitz
- 62, 62' bis 62"": Flüssigkeitsspiegel
- 63: Aufnahmeöffnung
- 64: Bajonettverschlußstück

## Patentansprüche

1. Wassernachfüllstopfen für einen flüssigen Elektrolyten enthaltende Batterien mit einem Steckstopfengehäuse (11), welches im unteren Bereich außen entweder komplementär zu einer oberen Batteriegehäuseöffnung oder einem Adapter (59) ausgebildet ist, der seinerseits komplementär zu einer oberen Batteriegehäuseöffnung gestaltet ist, einer oben am Steckstopfengehäuse (11) angeordneten, nach außen abgeschlossenen, vorzugsweise kreiszylindrischen und/oder oben einen Deckel (53) aufweisenden Wasserkammer (13), welche eine durch ein Ventil (14) verschließbare Wasserzulauföffnung (15) und wenigtens eine Strömungsverbindung mit demjenigen Bereich des Steckstopfengehäuses (11) hat, der nach dem Einsetzen in eine Batteriegehäuseöffnung mit dem Innenraum der Batterie in Verbindung steht, mit wenigstens einem Rohrstutzen (16), an den ein Wasserzuführschlauch ansetzbar ist und welcher in Strömungsverbindung (17) mit dem Ventileinlaß (18) steht, mit einem unten aus dem Steckstopfengehäuse (11) herausragenden Schwimmer (19), der über eine Schwimmerstange (20) und ein an deren oberem Endbereich vorgesehenes Querstück (21) mit dem Ventilkörper (22) verbunden ist, welcher in einem einerseits den Ventileinlaß (18) und andererseits die Wasserzulauföffnung (15) aufweisenden Ventilgehäuse (24) angeordnet ist, wobei rund um die Wasserzulauföffnung (15) an der Oberseite des Ventilgehäuses (24) sich unten der Ventilsitz (25) befindet und ein Ventilstößel (27) sich vom Ventilkörper (22) durch die Wasserzulauföffnung (15) zum Querstück (21) erstreckt,
dadurch gekennzeichnet,
daß der Ventilstößel (27) zumindest in vertikaler Richtung formschlüssig und spielfrei mit dem Querstück (21) verbunden ist,
daß der Ventilstößel (27) mit dem Querstück (21) zusammengeklipst ist, daß das dem Ventilstößel (27) zugewandte Ende des Querstücks (21) federnd gabelförmig und das obere Ende des Ventilstößels (27) komplementär dazu ausgebildet ist, derart, daß das obere Ende des Ventilstößels (27) seitlich in die Gabelöffnung (25) einführbar ist und dort in seitlicher und vertikaler Richtung spielfrei gehalten ist,
und daß der Ventilstößel (27) oben eine seitliche Nut (31) oder diametral gegenüberliegend zwei Nuten (31') mit horizontalen Seitenflanken (32, 32') aufweist, in welche jeweils einer der Gabelzinken (28) der Gabel (38) passend eingreift und den Ventilstößel (27) zumindest vertikal spielfrei hält.

2. Wassernachfüllstopfen nach Anspruch 1,
dadurch gekennzeichnet,
daß die Gabelöffnung als sich in seitlicher Richtung erstreckender Gabelschlitz (25) ausgebildet ist.

3. Wassernachfüllstopfen nach Anspruch 1 oder 2,
dadurch gekennzeichnet,
daß die Gabelzinken (28) aufeinander zu weisende Rastvorsprünge (29) aufweisen, die nach dem Einführen des oberen Endes des Ventilstößels (27) hinter die Umfangsfläche (30) des oberen Endes des Ventilstößels (27) greifen und den Ventilstößel (27) auf diese Weise seitlich halten.

4. Wassernachfüllstopfen nach Anspruch 3,
dadurch gekennzeichnet,
daß derjenige Umfangsteil des Ventilstößels (27), der dem mit den Rastvorsprüngen (29) in Eingriff stehenden Umfangsteil diametral gegenüberliegt, an dem Ende des Gabelschlitzes (25) anliegt, der der Schwimmerstange (20) zugewandt ist.

5. Wassernachfüllstopfen nach Anspruch 3 oder 4,
dadurch gekennzeichnet,
daß an den Rastvorsprüngen (29), und zwar an der offenen Seite des Gabelschlitzes (22) Einlaufschrägen vorgesehen sind.

6. Wassernachfüllstopfen nach einem der vorhergehenden Ansprüche,
dadurch gekennzeichnet,
daß das Steckstopfengehäuse (11) unten als Steckstopfen ausgebildet ist.

7. Wassernachfüllstopfen nach einem der Ansprüche 1 bis 5,
dadurch gekennzeichnet,
daß das Steckstopfengehäuse (11) unten zur Anordnung verschiedener Adapter (59) ausgebildet ist.

## Claims

1. Water top-up plug for batteries containing a liquid electrolyte, comprising a push-in plug housing (11) which is externally formed in the lower region either complementary to an upper battery housing opening or to an adapter (59) which is in turn made complementary to an upper battery housing opening, a water chamber (13), which is closed off towards the outside, is arranged at the top of the push-in plug housing (11) and is preferably of right-cylindrical shape and/or has a cover (53) at the top, the water chamber having a water inlet opening (15) which can be closed by a valve (14) and at least one flow connection to that region of the push-in plug housing (11) which communicates with the inner space of the battery following the insertion into a battery housing opening, at least one tube stub (16) onto which a water supply hose can be placed and which stands in flow communication (17) with the valve inlet (18), a float (19) which projects downwardly out of the push-in plug housing (11) and which is connected via a float rod (20) and a transverse member (21) provided at its upper end region to the valve body (22), which is arranged in a valve housing (24) having, on the one hand, the valve inlet (18) and, on the other hand, the water inlet opening (15), wherein the valve seat (25) is located downwardly around the water inlet opening (15) at the upper side of the valve housing (24) and a valve stem (27) extends from the valve member (22) through the water inlet opening (15) to the transverse member (21),
characterised in that
the valve stem (27) is connected in a form-fitted manner and free of clearance to the transverse member (21), at least in the vertical direction, in that the valve stem (27) is clipped together with the transverse member (21); in that the end of the transverse member (21) confronting the valve stem (27) is of resilient fork-like design and the upper end of the valve stem (27) is made complementary thereto in such a way that the upper end of the valve stem (27) con be introduced from the side into the fork opening (25) and is held there free of clearance in the lateral and vertical direction, and in that the valve stem (27) has at the top a side groove (21) or two diametrically oppositely disposed grooves (31') with horizontal side flanks (32, 32') into which a respective one of the fork prongs (28) of the fork (38) fittingly engages and holds the valve stem (27) without clearance, at least vertically.

2. Water top-up plug in accordance with claim 1,
characterised in that
the fork opening is formed as a fork slot (25) which extends in the lateral direction.

3. Water top-up plug in accordance with claim 1 or claim 2,
characterised in that
the fork prongs (28) have latch projections (29) which face one another and which engage behind the peripheral surface (30) of the upper end of the valve stem (27) after the introduction of the upper end of the valve stem (27) and in this manner hold the valve stem (27) sideways.

4. Water top-up plug in accordance with claim 3,
characterised in that
the peripheral part of the valve stem (27) which lies diametrically opposite to the peripheral part which stands in engagement with the latch projections (29) contacts the end of the fork slot (25) which faces the float rod (20).

5. Water top-up plug in accordance with claim 3 or claim 4,
characterised in that
run-in ramps are provided on the latch projections (29), and indeed at the open side of the fork slot (22).

6. Water top-up plug in accordance with one of the preceding claims,
characterised in that
the push-in plug housing (11) is formed at the bottom as a push-in plug.

7. Water top-up plug in accordance with one of the claims 1 to 5,
characterised in that
the push-in plug housing (11) is formed at the bottom for the provision of different adapters (59).

## Revendications

1. Bouchon de re-remplissage d'eau pour des accumulateurs contenant un électrolyte liquide, comportant un boîtier de bouchon enfichable (11) qui est réalisé dans la zone inférieure à l'extérieur de façon complémentaire soit à une ouverture supérieure de boîtier d'accumulateur soit à un adaptateur (59) qui est réalisé à son tour de façon complémentaire à une ouverture supérieure de boîtier d'accumulateur, comportant une chambre à eau (13) qui est agencée en haut sur le boîtier de bouchon enfichable (11), fermée vers l'extérieur, de préférence en forme cylindrique circulaire et/ou présentant en haut un couvercle (53) qui possède une ouverture d'amenée d'eau (15) refermable par une vanne (14) et au moins une liaison d'écoulement avec cette zone du boîtier de bouchon enfichable (11) qui, après mise en place dans une ouverture de boîtier d'accumulateur, est en communication avec l'espace intérieur de l'accumulateur, comportant au moins un manchon tubulaire (16) auquel peut venir se brancher un tuyau d'amenée d'eau et qui est en communication d'écoulement (17) avec l'entrée de vanne (18), comportant un flotteur (19) qui dépasse en bas hors du boîtier de bouchon enfichable (11) et qui est relié, via une tige de flotteur (20) et via un élément transversal (21) prévu dans sa zone extrême supérieure, au corps de vanne (22) agencé dans un boîtier de vanne (24) présentant d'une part l'entrée de vanne (18) et d'autre part l'ouverture d'amenée d'eau (15),
dans lequel est prévu en bas tout autour de l'ouverture d'amenée d'eau (15) un siège de vanne (25) sur la face supérieure du boîtier de vanne (24), et un poussoir de vanne (27) s'étend depuis le corps de vanne (22) à travers l'ouverture d'amenée d'eau (15) jusqu'à l'élément transversal (21), caractérisé en ce que :
- le poussoir de vanne (27) est relié du moins en direction verticale par coopération de formes et sans jeu à l'élément transversal (21),
- le poussoir de vanne (27) est clipsé avec l'élément transversal (21),
- l'extrémité de l'élément transversal (21) orientée vers le poussoir de vanne (27) est réalisée élastique et en forme de fourchette, et l'extrémité supérieure du poussoir de vanne (27) est réalisée de façon complémentaire, de telle sorte que l'extrémité supérieure du poussoir de vanne (27) peut s'introduire latéralement dans l'ouverture de fourchette (25) et y est maintenue sans jeu en direction latérale et en direction verticale,
- et le poussoir de vanne (27) présente en haut une gorge latérale (31) ou deux gorges (31') diamétralement opposées, comportant des flancs latéraux horizontaux (32, 32') dans chacun desquels s'engage avec ajustement l'une des pointes (28) de la fourchette (38) et maintient le poussoir de vanne (27) du moins verticalement sans jeu.

2. Bouchon de re-remplissage d'eau selon la revendication 1, caractérisé en ce que l'ouverture de fourchette est réalisée sous forme d'une fente de fourchette (25) qui s'étend en direction latérale.

3. Bouchon de re-remplissage d'eau selon l'une ou l'autre des revendications 1 et 2, caractérisé en ce que les pointes de fourchette (28) présentent des saillies d'enclenchement (29) dirigées l'une vers l'autre qui, après avoir introduit l'extrémité supérieure du poussoir de vanne (27), s'engagent derrière la surface périphérique (30) de l'extrémité supérieure du poussoir de vanne (27) et maintiennent de cette manière latéralement le poussoir de vanne (27).

4. Bouchon de re-remplissage d'eau selon la revendication 3, caractérisé en ce que celle des parties périphériques du poussoir de vanne (27) qui est diamétralement opposée à la partie périphérique en engagement avec les saillies d'enclenchement (29), s'appuie contre l'extrémité de la fente de fourchette (25) qui est orientée vers la tige de flotteur (20).

5. Bouchon de re-remplissage d'eau selon l'une ou l'autre des revendications 3 et 4, caractérisé en ce que des chanfreins d'entrée sont prévus sur les saillies d'enclenchement (29), à savoir sur le côté ouvert de la fente de fourchette (25).

6. Bouchon de re-remplissage d'eau selon l'une quelconque des revendications précédentes, caractérisé en ce que le boîtier de bouchon enfichable (11) est réalisé en bas sous forme de bouchon enfichable.

7. Bouchon de re-remplissage d'eau selon l'une quelconque des revendications 1 à 5, caractérisé en ce que le boîtier de bouchon enfichable (11) est réalisé en bas de manière à pouvoir agencer différents adaptateurs (59).
